(19) Europäisches Patentamt
European Patent Office
Office européen des brevets

(11) Veröffentlichungsnummer: **0 433 653 B1**

(12) # EUROPÄISCHE PATENTSCHRIFT

(45) Veröffentlichungstag der Patentschrift: **14.12.94**

(51) Int. Cl.5: **C01B 15/12**

(21) Anmeldenummer: **90121760.4**

(22) Anmeldetag: **14.11.90**

Die Akte enthält technische Angaben, die nach dem Eingang der Anmeldung eingereicht wurden und die nicht in dieser Patentschrift enthalten sind.

(54) **Verfahren zur Herstellung von Natriumperborathydrat-Granulaten.**

(30) Priorität: **19.12.89 DE 3941851**

(43) Veröffentlichungstag der Anmeldung:
**26.06.91 Patentblatt 91/26**

(45) Bekanntmachung des Hinweises auf die Patenterteilung:
**14.12.94 Patentblatt 94/50**

(84) Benannte Vertragsstaaten:
**AT BE DE FR GB IT SE**

(56) Entgegenhaltungen:
**EP-A- 0 328 768**
**WO-A-91/02696**

(73) Patentinhaber: **Degussa Aktiengesellschaft**
**Weissfrauenstrasse 9**
**D-60311 Frankfurt (DE)**

(72) Erfinder: **Herzig, Jörg**
**Sudetenstrasse 7**
**W-6457 Maintal 2 (DE)**
Erfinder: **Zikofsky, Wolfgang**
**Tannenweg 2a**
**W-6451 Ronneburg (DE)**
Erfinder: **Bertsch-Frank, Birgit, Dr.**
**Grünaustrasse 15**
**W-6450 Hanau 9 (DE)**
Erfinder: **Lieser, Thomas, Dr.**
**Treuener Strasse 1**
**W-6450 Hanau 9 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung von Natriumperborathydrat-Granulaten mit einem Aktivsauerstoffgehalt von 14 bis 18 Gew.-%, insbesondere Natriumperboratmononydrat-Granulat mit einem Aktivsauerstoffgehalt von 15 bis 16 Gew.-%, einem Schuttgewicht von über 0,6 bis 1,2 kg/$dm^3$, einem Abriebindex nach ISO-Test 5937 von nicht mehr als 10 % und einer Lösegeschwindigkeit von unter 1,5 Minuten für 1g Granulat der Kornung 0.2 bis 0.8 mm in 500 $cm^3$ Wasser bei 15 °C durch Verdichten und Granulieren von Natriumperborathydrat mit niedrigerem Schüttgewicht als dasjenige der Granulate.

Unter den Na-Perborathydraten werden Verbindungen der allgemeinen Formel

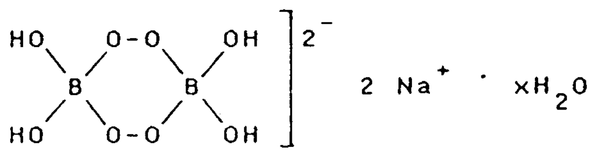

verstanden, wobei für das in der Technik üblicherweise als Tetrahydrat bezeichnete Produkt x gleich 6 und für das als Monohydrat bezeichnete Produkt mit 16 Gew.-% Aktivsauerstoff (Oa) x gleich 0 ist. Bekannt sind auch sogenannte superoxidierte Perborathydrate mit einem Oa-Gehalt über 16 Gew.-%, deren Struktur aber noch nicht gesichert erscheint. Die erfindungsgemäß herzustellenden Granulate mit einem Aktivsauerstoffgehalt (Oa) von 14 bis 18 Gew.-% können somit unterschiedliche Stoffe enthalten, wenngleich Natriumperboratmonohydrat das Hauptprodukt darstellt.

Natriumperborathydrate mit Oa-Werten im Bereich von 14 bis 18 Gew.-%, insbesondere Natriumperboratmonohydrat mit Oa = 15 bis 16 Gew.-%, gewinnen wegen ihres gegenüber dem Tetrahydrat höheren Oa-Gehalts und höheren Lösegeschwindigkeit zunehmend an Bedeutung. Zusätzlich werden von solchen Perboraten eine hohe Abriebbeständigkeit und ein möglichst hohes Schüttgewicht gefordert, um ein weitgehend staubarmes pneumatisches Fördern zu ermöglichen und die Produkte in sogenannten Waschmittel-Volumenkonzentraten einsetzen zu können. Die Herstellung solcher Produkte ist nicht unproblematisch, weil die Stoffeigenschaften Abriebbeständigkeit, Lösegeschwindigkeit und Schüttgewicht zum Teil gegenläufig sind.

Perboratmonohydrat, das durch Dehydratisieren von kristallinem Perborattetrahydrat hergestellt wird, weist zwar die gewünschte Lösegeschwindigkeit von im allgemeinen unter 1,5 Minuten - 1g pro 500 $cm^3$ bei 15 °C - auf, es ist aber wenig abriebstabil, und zudem konnten nur Schüttgewichte unter 0.6 kg/$dm^3$ erzielt werden. Durch Einhaltung spezieller Dehydratisierbedingungen kann zwar die Abriebbeständigkeit, jedoch kaum das Schüttgewicht erhöht werden - vgl. DE-PS 22 58 319, DE-PS 24 44 780, EP-A 194 952, EP-A 202 519. Die gemäß EP-A 202 518, EP-A 295 950, EP-A 296 813 durch Dehydratisierung gewonnenen Perboratmonohydrat-Granulate enthalten artfremde Bindemittel wie z. B. Natriumsilikat bzw. Carbonsäureverbindungen, dennoch entsprechen sie nicht dem geforderten Eigenschaftsbild.

Es ist auch versucht worden - US-PS 4,002,434 - die Abriebbeständigkeit von Perboratmonohydrat durch Befeuchten und Trocknen zu verbessern; die Lösegeschwindigkeit bleibt zwar hoch, das Schüttgewicht ändert sich aber nicht nennenswert und auch die Abriebbeständigkeit entspricht nicht mehr dem heutigen Standard. Bekannt sind Zeolithe enthaltende Natriumperboratmonohydrat-Granulate - DE-PS 26 52 488 mit variabel einstellbarer Lösegeschwindigkeit, Abriebbeständigkeit und Schüttgewicht; die zwingende Anwesenheit von teilweise großen Mengen Zeolith senkt aber den Oa-Gehalt und schränkt die Einsatzmöglichkeiten ein.

Nach den Verfahren der US-PS 4,115,519 bzw. US-PS 4,185,960 gelingt es, abriebfestes, granulatförmiges Natriumperboratmonohydrat bzw. Perborathydrat mit einem Oa-Wert über 16 % durch Versprühen einer wäßrigen Wasserstoffperoxidlösung und Natriummetaboratlösung in einen Wirbelschichttrockner, der Keime mit kleinerem Durchmesser als das herzustellende Granulat enthält, herzustellen. Auf diesem Wege ist zwar ein abriebfestes Granulat mit hohem Schüttgewicht zugänglich, jedoch muß als Kennzeichen des Verfahrensproduktes angesehen werden, daß die Lösegeschwindigkeit gegenüber durch Dehydratisierung hergestelltem Perboratmonohydrat ganz wesentlich reduziert ist. Die unbefriedigende Lösegeschwindigkeit konnte durch Mitverwendung eines Tensids in dem vorgenannten Herstellungsverfahren etwas verbessert werden - siehe US-PS 4,215,097 -, aber Granulate mit einer Lösegeschwindigkeit von unter 1,5 Minuten für 1g pro 500 $cm^3$ bei 15 °C waren, wie aus den Beispielen des genannten Dokuments folgt, in keiner Weise herstellbar.

Aus der EP-A 328 768 ist ein weiteres Verfahren zur Herstellung von Natriumperborat-Granulaten mit Oa-Werten von vorzugsweise 14 bis 16 Gew.-% bekannt, das es gestattet, auch Granulate mit einem hohen Schüttgewicht, einer hohen Lösegeschwindigkeit und einem Abrieb im Bereich marktgängiger Produkte zu erzeugen. Bei dem Verfahren werden in Abwesenheit von Keimen durch Sprühtrocknung erhaltene, im wesentlichen amorphe Primärteilchen unmittelbar nach Verlassen der Trocknungszone einer Granuliervorrichtung zugeführt und in Gegenwart von freiem und/oder Perborat-Kristallwasser granuliert. In diesem Dokument wurde darauf hingewiesen, daß durch Verwendung einer höher verdichtenden Granuliervorrichtung, etwa einem kontinuierlich arbeitenden Mischer oder einer Trommel mit umlaufenden Schaufeln oder Schnecken, Perborathydrat-Granulate mit Schüttdichten bis 1,0 g/ml hergestellt werden können. In der EP-A 328 768 wurde als wesentlich erachtet, die Granulierung unmittelbar im Anschluß an die Bildung der Primärteilchen durch Sprühtrocknung durchzuführen.

Es wurde festgestellt, daß sich handelsübliches, durch Dehydratisierung gewonnenes Natriumperboratmonohydrat mit einem Schüttgewicht um 550 g/dm$^3$ unter Verwendung eines Walzenkompaktors nicht befriedigend kompaktieren und aus der Schülpe ein Granulat gewinnen läßt. Die Ausbeute an Schülpe ist sehr gering - um/unter 5 % - und zusätzlich läßt sich das Schüttgewicht nur geringfügig erhöhen; ein weiteres Problem stellt die Verklebungsneigung der Walzen dar.

Die Aufgabe der Erfindung richtet sich somit auf die Bereitstellung eines Verfahrens zur Herstellung von Natriumperborathydrat-Granulaten mit einem Aktivsauerstoffgehalt (Oa) von 14 bis 18 Gew.-%, einem Abriebindex nach ISO-Test 5937 von nicht mehr als 10 %, einer Lösegeschwindigkeit von unter 1,5 Minuten für 1 g Granulat der Kornfraktion 0,2 bis 0,8 mm in 500 cm$^3$ Wasser bei 15 °C und einem Schüttgewicht von über 0,6 bis 1,2 kg/dm$^3$ aus Natriumperborathydrat mit niedrigerem Schüttgewicht, das einfach durchführbar ist. Ferner sollte das Verfahren ohne die Mitverwendung artfremder Hilfsstoffe als Granulierhilfsmittel sowie ohne die unmittelbare Kopplung der Bildung von Primärteilchen eines Sprühverfahrens mit weiteren Granulierschritten durchführbar sein. Eine weitere Aufgabe richtet sich auf die nach dem Verfahren erhältlichen Granulate.

Die Aufgabe, d. h. die Herstellung von Natriumperborathydrat-Granulaten mit den vorgenannten Eigenschaften wird dadurch gelöst, daß man sprühgetrocknetes, im wesentlichen amorphes Natriumperborathydrat, das einen Oa-Gehalt von 14 bis 18 Gew.-%, eine Teilchengröße von 90 % kleiner 100 µm, eine Lösegeschwindigkeit unter 1 Min. und einen Gewichtsverlust von 0,2 bis 2,0 Gew.-%, bestimmt durch 30 minütiges Lagern bei 60 °C und 100 Pa. aufweist, zwischen Walzen bei einem Anpreßdruck von $5 \cdot 10^3$ bis $2 \cdot 10^4$ N/cm bei Raumtemperatur eder einer Temperatur bis 35 °C kompaktiert, die Schülpen zerkleinert und das dabei erhaltene Granulat, ggf. nach einer mechanischen Nachbehandlung zur Abrundung der Granulatkörner, kornfraktioniert. Weitere Ansprüche richten sich auf besondere Ausführungsformen des Verfahrens.

Daß durch die Maßnahmen des erfindungsgemäßen Verfahrens alle erwünschten Stoffeigenschaften, nämlich ein hoher Oa-Wert, eine auch bei 15 °C hohe Lösegeschwindigkeit, ein niedriger Abrieb und ein hohes Schüttgewicht in den angegebenen Grenzen sicher einstellbar sind, war nicht vorhersehbar. Durch das erfindungsgemäße Verfahren sind nicht nur Granulate mit einem Schüttgewicht von über 0,6 bis 1,0 kg/dm$^3$, sondern auch solche mit über 1,0 bis 1,2 kg/dm$^3$ zugänglich.

Überraschend war das Ergebnis der erfindungsgemäßen Maßnahmen - siehe Beispiele 1 bis 4 - sowohl im Hinblick auf die unbefriedigenden Ergebnisse der Walzenkompaktierung von durch Dehydratisierung von Natriumperborattetrahydrat gewonnenem Natriumperboratmonohydrat - siehe Vergleichsbeispiele 1 und 2 - als auch dadurch, daß sich die Kompaktierung nicht unmittelbar an die Bildung des sprühgetrockneten Natriumperborathydrats anschließen mußte.

Die Kompaktierung erfolgt zwischen zwei sich drehenden Walzen, wobei auch mehrere Walzenpaare hintereinander geschaltet werden können. Die Oberflächenstruktur der Walzen kann glatt sein oder eine feine Riffelung aufweisen. Der Anpreßdruck der Walzen liegt im Bereich von $5 \cdot 10^3$ N/cm bis $2 \cdot 10^4$ N/cm, vorzugsweise zwischen $1,0 \cdot 10^4$ und $1,8 \cdot 10^4$ N/cm. Mit zunehmendem Anpreßdruck kann das Schüttgewicht erhöht werden.

Überraschenderweise gelingt es aber trotz hoher Verdichtung, die Lösegeschwindigkeit des Granulats unter 1,5 Minuten, vorzugsweise sogar unter 1 Minute, für 1g Granulat/500 cm$^3$ bei 15 °C zu halten. Die Kompaktierung erfolgt bei Raumtemperatur oder bei der durch Friktion zwischen den Kompaktierwalzen auftretenden Temperatur, beispielsweise 30 bis 35 °C; sofern erforderlich, werden die Walzen gekühlt. Der eigentlichen Walzenkompaktierung kann unverdichtetes oder bereits vorverdichtetes sprühgetrocknetes Material zugeführt werden. Zur Vorverdichtung eignen sich beispielsweise Verdichterschnecken und/oder Vorrichtungen mit Vakuumentlüftung.

An die Walzenkompaktierung schließen sich an sich bekannte Maßnahmen zum Zerkleinern der erhaltenen Schülpe auf das gewünschte Maß und Kornfraktionierung des Granulats, etwa unter Verwendung

von Sieb- und Sichteinrichtungen, an. Überkorn wird weitergebrochen, Unterkorn erneut der Kompaktierung zugeleitet. Besonders vorteilhaft ist es, mittels Sieben das Überkorn abzutrennen und anschließend das Granulat unter mäßiger mechanischer Beanspruchung, beispielsweise in einem Drehrohr oder Fließbett, abzurunden und in Sichteinrichtungen von anhaftendem Staub zu befreien. Zum Zerkleinern der Schülpe sind einfache Messerwerke, Mühlen oder Brecher geeignet; besonders bevorzugt werden Siebkorbgranulatoren eingesetzt. Soweit erwünscht, kann das Granulat nachgetrocknet werden.

Bei dem zu granulierenden sprühgetrockneten Perborathydrat handelt es sich um im wesentlichen amorphe Partikel einer Sprühtrocknung mit einem Oa-Gehalt von 14 bis 18 Gew.-%, vorzugsweise setzt man Natriumperboratmonohydrat mit einem Oa-Gehalt von 15 bis 16 Gew.-% ein. Das Schüttgewicht der zu granulierenden Partikel liegt unter jenem der herzustellenden Granulate, vorzugsweise unter 600 g/dm$^3$, insbesondere zwischen 100 und 500 g/dm$^3$. Die zu verwendenden Partikel lösen sich unter Rühren bei 15 °C in weniger als 1 Minute vollständig auf, wenn man 1g in 500 cm$^3$ Wasser einbringt. Mindestens 90 % der Partikel sollen kleiner als 100 µm sein. Ein wesentliches Merkmal ist der Gewichtsverlust, den die einzusetzenden Partikel bei der Lagerung bei 60 °C und 100 Pa innerhalb 30 Minuten erleiden. Bei diesem Gewichtsverlust dürfte es sich im wesentlichen um Wasser, in gewissem Umfang ggf. auch Wasserstoffperoxid und Sauerstoff, handeln. Natriumperboratmonohydrat mit einem Gewichtsverlust im Bereich von 1,0 bis 1,8 Gew.-% wird bevorzugt eingesetzt. Perborathydrate, wie sie durch die Sprühtrocknung gemäß EP-A 328 768 erhältlich sind, aber auch nach diesem Verfahren erhältliche Produkte mit einem Oa-Gehalt von 16 bis 18 Gew.-% - herstellbar durch Erhöhung des $H_2O_2$ / $NaBO_2$-Verhältnisses der Sprühlösung - sind geeignet, sofern die Trocknung soweit geführt wird, daß der angegebene Gewichtsverlust resultiert. Der Begriff "im wesentlichen amorph" bedeutet, daß in Röntgenbeugungsaufnahmen von Pulvern mit CuK$\alpha$-Strahlung praktisch keine auf kristalline Bereiche deutende Signale erkennbar sind.

Das erfindungsgemäße Verfahren ist nicht nur einfach durchführbar, sondern hierdurch konnte auch die thermische Belastung des zu granulierenden Perborats im Vergleich zum Verfahren der EP-A 328 768 vermindert werden. Die Eigenschaften der nach dem erfindungsgemäßen Verfahren zugänglichen Granulate entsprechen den Marktforderungen.

Der Abriebindex der Granulate wird nach dem ISO-Test 5937 (1980), das Schüttgewicht nach dem ISO-Test 3424 bestimmt. Der Oa-Gehalt läßt sich in bekannter Weise mittels $KMnO_4$-Maßlösung titrieren. Der Test für die Lösegeschwindigkeit, welche vorzugsweise konduktometrisch verfolgt wird, erfolgt in einem Becherglas bei 15 °C unter Rühren mit einem Flügelrührer bei 330 UpM, wobei das zu granulierende Ausgangsprodukt direkt und bei den erfindungsgemäß granulierten Produkten eine Kornfraktion im Bereich von 0,2 bis 0,8 mm eingesetzt wird.

Durch die folgenden Vergleichsbeispiele und Beispiele wird die Erfindung verdeutlicht.

## Vergleichsbeispiele

1. Handelsübliches Natriumperboratmonohydrat, das durch Dehydratisierung von Natriumperborattetrahydrat gewonnen wurde und einen Oa-Gehalt von 15,4 %, ein Schüttgewicht von 530 g/dm$^3$, einen Trocknungsverlust von 0,9 Gew.-% (30 Minuten, 60 °C, 100 Pa) und ein Kornspektrum von 10 % < 200 µm und 10 % > 700 µm aufwies, wurde einem Walzenkompaktor (Laborkompaktor Typ L 200/50, Fa. Bepex) zugeführt. Eine Verdichtung war nur mit einer Ausbeute unter 5 % möglich.
2. Das Natriumperboratmonohydrat des Beispiels 1 wurde unter Verwendung einer Walzenpresse (Firma Alexanderwerk, Typ WP 50N) mit horizontaler Schneckendosierung und federnd gelagerter Walzenanordnung mit Glattwalzen mit Querriffelung bei $3 \cdot 10^3$ N/cm kompaktiert. Bereits nach kurzer Betriebszeit mußte der Versuch wegen beginnender Klebeeffekte abgebrochen werden. Ein höherer Anpreßdruck erhöhte die Klebeneigung. Das bis zum Abbruch des Versuchs erhaltene Produkt wurde im Siebgranulator zerkleinert und fraktioniert. Der Abriebindex nach ISO-Test 5937 (1980) betrug 17 %.

## Beispiele 1 bis 4

Durch Sprühtrocknen erhaltenes, im wesentlichen amorphes Natriumperboratmonohydrat - Herstellung gemäß der ersten Verfahrensstufe der EP-A 328 768 - wurde in einem Laborkompaktor (Fa. Bepex. Typ L 200/50), ausgestattet mit Glattwalzen mit Querriffelung und einer Vorverdichterschnecke als Materialzuführungsvorrichtung, kompaktiert. Die Schülpen wurden in einem Siebkorbgranulator (Fa. Freiwitt, Typ MG 205) auf die gewünschte Korngröße zerkleinert, anschließend wurde mittels eines Schwingsiebs gesiebt und das Produkt durch Sichten in der wirbelnden Schicht von anhaftenden und beim Wirbeln gebildetem Staub befreit. Aus der nachfolgenden Tabelle sind die Stoffdaten der eingesetzten Perborate, die Betriebsbedingungen der Kompaktierung sowie die Stoffdaten des Granulats für den Kornbereich 0,2 bis 0,8 mm zu

entnehmen.

Das in den Beispielen eingesetzte sprühgetrocknete Natriumperboratmonohydrat wies einen $d_{50}$-Wert im Bereich von 30 bis 40 µm und eine Lösegeschwindigkeit kleiner 1 Minute (15 °C; 1 g/500 ml) auf.

| | Beispiel 1 | Beispiel 2 | Beispiel 3 | Beispiel 4 |
|---|---|---|---|---|
| Sprühgetrocknetes Naperboratmonohydrat | | | | |
| Oa-Gehalt (Gew.-%) | 15,3 | 15,6 | 15,5 | 15,8 |
| Schüttgewicht (g/dm$^3$) | 265 | 280 | 310 | 350 |
| Gewichtsverlust (%) (30 Min., 60 °C, 100 Pa) | 0,3 | 0,8 | 1,2 | 1,6 |
| Kompaktierbedingungen | | | | |
| Durchsatz (kg / Stunde) | 80 | 120 | 40 | 40 |
| Anpreßdruck (kN/cm) | 12 | 16 | 18 | 18 |
| Walzentemperatur | 30-34 | 30-34 | 30-34 | 30-34 |
| Natriumperboratmonohydrat-Granulat | | | | |
| Oa-Gehalt (Gew.-%) | 15,3 | 15,6 | 15,4 | 15,6 |
| Schüttgewicht (g/dm$^3$) | 770 | 810 | 845 | 910 |
| Lösegeschwindigkeit (Min.) | 1 | 1 | 1 | 1,0 |
| Abriebindex (ISO 5937) (%) | 9,9 | 8,0 | 7,5 | 6,0 |
| Kornspektrum (mm) | 0,2-0,8 | 0,2-0,8 | 0,2-0,8 | 0,2-0,8 |
| BET-Oberfläche (m$^2$/g, $N_2$) | 3,7 | 2,4 | 2,1 | 1,6 |

## Patentansprüche

1. Verfahren zur Herstellung von Natriumperborathydrat-Granulaten mit einem Aktivsauerstoffgehalt (Oa) von 14 bis 18 Gew.-%, einem Abriebindex nach ISO-Test 5937 von nicht mehr als 10 %, einer Lösegeschwindigkeit von unter 1,5 Minuten für 1 g Granulat der Kornfraktion 0,2 bis 0,8 mm in 500 $cm^3$ Wasser bei 15 °C und einem Schüttgewicht von über 0,6 bis 1,2 $kg/dm^3$ durch Granulieren von Natriumperborathydrat mit niedrigerem Schüttgewicht ohne unmittelbare Kopplung der Bildung des Natriumperborathydrats mit niedrigerem Schüttgewicht mit der Granulierung,
   dadurch gekennzeichnet,
   daß man sprühgetrocknetes, im wesentlichen amorphes Natriumperborathydrat, das einen Oa-Gehalt von 14 bis 18 Gew.-%, eine Teilchengröße von 90 % kleiner 100 µm, eine Lösegeschwindigkeit unter 1 Minute und einen Gewichtsverlust von 0,2 bis 2,0 Gew.-%, bestimmt durch 30 minütiges Lagern bei 60 °C und 100 Pa, aufweist, zwischen Walzen bei einem Anpreßdruck von $5 \cdot 10^3$ bis $2 \cdot 10^4$ N/cm bei Raumtemperatur oder einer Temperatur bis 35 °C kompaktiert, die Schülpen zerkleinert und das dabei erhaltene Granulat kornfraktioniert.

2. Verfahren nach Anspruch 1,
   dadurch gekennzeichnet,
   daß man ein sprühgetrocknetes Natriumperborathydrat mit einem Schüttgewicht von kleiner 600 $g/dm^3$, vorzugsweise 100 bis 500 $g/dm^3$, kompaktiert, das durch Zerkleinern der Schülpen erhaltene Granulat unter mäßiger mechanischer Beanspruchung abrundet und kornfraktioniert.

3. Verfahren nach Anspruch 1 oder 2,
   dadurch gekennzeichnet,
   daß man sprühgetrocknetes Natriumperboratmonohydrat mit einem Aktivsauerstoffgehalt von 15 bis 16 Gew.-% kompaktiert.

4. Verfahren nach einem der Ansprüche 1 bis 3,
   dadurch gekennzeichnet,
   daß man das zu kompaktierende Material den Kompaktierwalzen in mittels Verdichterschnecken und/oder Vakuumentlüftung erzeugter vorverdichteter Form zuführt.

5. Verfahren nach einem der Ansprüche 1 bis 4,
   dadurch gekennzeichnet,
   daß der Anpreßdruck der Walzen $1 \cdot 10^4$ bis $1{,}8 \cdot 10^4$ N/cm beträgt.

## Claims

1. A process for preparing sodium perborate hydrate granules with an active oxygen content (Oa) of 14 to 18 wt.%, an abrasion index according to ISO test 5937 of not more than 10%, a rate of dissolution of less than 1.5 minutes for 1 g of granules with particle sizes of 0.2 to 0.8 mm in 500 $cm^3$ of water at 15 °C and a bulk density of more than 0.6 to 1.2 $kg/dm^3$ by granulating sodium perborate hydrate with a lower bulk density without directly connecting formation of the sodium perborate hydrate with a lower bulk density with granulation,
   characterised in that
   spray-dried, essentially amorphous sodium perborate hydrate, which has an Oa content of 14 to 18 wt.%, particle sizes such that 90% are smaller than 100 µm, a rate of dissolution of less than 1 minute and a weight loss of 0.2 to 2.0 wt.%, determined by 30 minutes' storage at 60 °C and 100 Pa, is compacted between rollers with a contact pressure of $5 \times 10^3$ to $2 \times 10^4$ N/cm at room temperature or at a temperature up to 35 °C, the compacted material is crushed and the granules thus obtained are fractionated by size.

2. A process according to Claim 1,
   characterised in that
   a spray-dried sodium perborate hydrate with a bulk density of less than 600 $g/dm^3$, preferably 100 to 500 $g/dm^3$, is compacted, the granules obtained by crushing the compacted material are rounded under moderate mechanical stress and fractionated by size.

3. A process according to Claim 1 or 2, characterised in that spray-dried sodium perborate monohydrate with an active oxygen content of 15 to 16 wt.% is compacted.

4. A process according to one of Claims 1 to 3, characterised in that the material to be compacted is fed to the compacting rollers in a pre-compacted form produced by means of compacting screws or by removing the air under vacuum.

5. A process according to one of Claims 1 to 4, characterised in that the contact pressure of the rollers is $1 \times 10^4$ to $1.8 \times 10^4$ N/cm.

## Revendications

1. Procédé d'obtention de granulés d'hydrate de perborate de sodium ayant une teneur en oxygène actif (Oa) de 14 à 18 % en poids, un indice d'abrasion selon le test ISO 5937 de pas plus de 10 %, une vitesse de dissolution de moins de 1,5 minutes pour 1 g de granulé de la fraction granulométrique comprise entre 0,2 et 0,8 mm dans 500 $cm^3$ d'eau à 15 °C et une densité apparente de plus de 0,6 à 1,2 $kg/dm^3$, par granulation d'hydrate de perborate de sodium ayant une densité apparente inférieure, sans couplage direct de la formation de l'hydrate de perborate de sodium ayant une densité apparente inférieure à la granulation, caractérisé en ce que l'on compacte l'hydrate de perborate de sodium essentiellement amorphe, séché par atomisation qui possède une teneur en Oa de 14 à 18 % en poids, une taille de particules à 90 % inférieure à 100 µm, une vitesse de dissolution en dessous de 1 minute et une perte de poids allant de 0,2 à 2,0 % en poids, déterminée par séjour pendant 30 minutes à 60 °C et 100 Pa, compactage effectué entre des rouleaux à une pression de serrage de $5 \times 10^3$ à $2 \times 10^4$ N/cm à température ambiante ou à une température allant jusqu'à 35 °C, que l'on broie les copeaux et que l'on fractionne par taille de grains, le granulé ainsi obtenu.

2. Procédé selon la revendication 1, caractérisé en ce que l'on compacte un hydrate de perborate de sodium séché par atomisation ayant une densité apparente de moins de 600 $g/dm^3$, de préférence 100 à 500 $g/dm^3$, que l'on arrondit le granulé obtenu par broyage des copeaux sous contrainte mécanique modérée et que l'on fractionne par taille de grains.

3. Procédé selon la revendication 1 ou 2, caractérisé en ce que l'on compacte le monohydrate de perborate de sodium séché par atomisation, ayant une teneur en oxygène actif de 15 à 16 % en poids.

4. Procédé selon l'une des revendications 1 à 3, caractérisé en ce que l'on amène le produit à compacter aux rouleaux de compactage sous forme pré-comprimée obtenue à l'aide de vis sans fin de compression et/ou désaération par le vide.

5. Procédé selon l'une des revendications 1 à 4, caractérisé en ce que la pression de serrage des rouleaux s'élève de $1 \times 10^4$ à $1,8 \times 10^4$ N/cm.